# EUROPEAN PATENT SPECIFICATION

(11) **EP 3 828 667 B1**
(45) Date of publication and mention of the grant of the patent: **26.03.2025**
(21) Application number: 20210498.0
(22) Date of filing: 27.11.2020
(51) Int. Cl.: G06F 1/16, H04M 1/04

(54) **SHADE FOR A PORTABLE DEVICE**
BLENDE FÜR EIN TRAGBARES GERÄT
ÉCRAN ANTI-ÉBLOUISSEMENT POUR UN APPAREIL PORTABLE

(30) Priority: 27.11.2019 GB 201917299
(43) Date of publication of application: 02.06.2021
(73) Proprietor: Bowen, Barry Paul, Pembroke, Dyfed SA71 4HH (GB)
(72) Inventor: Bowen, Barry Paul, Pembroke, Dyfed SA71 4HH (GB)
(74) Representative: Barker Brettell LLP

(56) References cited:
- CN-Y- 2 850 158
- US-A1- 2016 227 663
- US-A1- 2017 279 944

## Description

### FIELD OF INVENTION

The present invention relates to a shade for a portable device, in particular a shade for providing a shading surface for a portable device when placed between a user and a light source.

### BACKGROUND OF THE INVENTION

There has been a continuous rise in the usage of portable devices across the globe, especially when relaxing on holiday. According to a study by Expedia^{™}, the amount of usage of mobile devices is attributed to the influx of social media platforms such as Facebook^{™} and Instagram^{™}. A large scale problem faced by many users of a mobile device is the difficulty in viewing their mobile device in direct sunlight. The average vacationer spends nine hours of a one-week-long trip browsing social media, many of these hours are spent laying in direct sunlight with the Sun's intensity shining directly in their eyes, causing problems for viewing their screen without the glare.

Many of these users tend to turn up their screen's brightness. The disadvantage of this is that it causes an enhanced drain on the device battery operating time - approximately 46% less operating time when at its brightest compared to when the phone is running at its lowest brightness setting. Other users resort to removing their sunglasses to look at their phone, because the lenses can be too dark for the user to clearly view their screen. An issue with this is that this exposes the eyeball to potential damage. Of the three types of light that the sun produces-visible, infrared, and ultraviolet-UV is the most damaging to structures within the eye, especially when reflected off sand, snow or water. The cells of the cornea, the transparent outer layer of the eye, will blister and crack when overexposed to UV light. Therefore this risk should be ideally be reduced. Some users may adapt alternative body positions including hunching over, which causes unnecessary stress on their neck or back, or even moving to a shaded area for short periods of time just to use their mobile device.

Unlike a book that can be held above the user between the user and the sun, portable devices typically have a surface area that is not adequate to stop sunlight from penetrating the user's eyes. Sunlight instead is able to pass around the sides/over the top of the phone, penetrating the user's eye.

Mobile phone accessories and the like that attach to the electronic device are known, CN105357340.describes a dual-purpose mobile phone shell. The mobile phone shell body is manufactured into a structure, which can be stretched and is particularly provided with a handle; and thus, the mobile phone shell body can be used as a fan. However, the shell described therein utilises a fan, with no consideration given to providing shade to user during use of the device. Additionally, said fan is fixed in relation to the phone and cannot be repositioned to suit the screen viewing orientation or sun direction.

One example of an accessory that is intended to provide shade is shown in US2017279944. This shows a mobile device shade apparatus that includes a case defining a pocket and at least one panel configured to travel in and out of the pocket to transition between a stowed state and a deployed state, wherein in the deployed state that at least one panel extends from and is rotatable with respect to an edge of the case. The apparatus also includes a coupler configured to couple the case to a mobile device, such as a cell phone or tablet, as examples. However, this device focusses solely on casting shade over the electronic device screen, akin to countersinking the display like a shade for a car dashboard, with no regard given to user's holding the device between themselves and the sun. Accordingly, such shade acts to reduce glare and reflections from the mobile device screen only.

The present invention aims to at least ameliorate the aforementioned disadvantages faced by users of portable devices in the sunlight.

### SUMMARY OF THE INVENTION

According to a first aspect of the present invention, there is provided a shade for a portable device having an electronic display, said shade comprising: a plurality of blades configured to splay open to form a planar or fanned surface for blocking sunlight; and a mount for securing the planar surface substantially adjacent to the electronic display to position the blades to provide a shading surface when the planar surface is placed between a user and a light source.

The shade of the present invention provides for a shade designed to mount and connect to a portable display device such as a mobile phone, e-book reader, tablet device, handheld gaming device, laptop, notebook or the like.

The use of blades allow the shade to form a planar surface easily, with the blades fanned out when shade against sunlight is needed, and to be collapsed when the planar surface is not needed.

The planar surface advantageously provides for an increased footprint of the device when held against the sun. Accordingly, if a device with the shade is placed between a user and the sun a larger area of the user's face is cast in shadow making for more comfortable reading of the screen of the device by the user.

The planar surface may be provided with motifs, designs or the like. This provides an additional level of customisation to a user, allowing creative expression similar to a mobile phone cover or the like.

In some embodiments, the shade may be configured to form the planar surface by rotating the fan blades relative to each other about a rivet. In some embodiments the blades may comprise additional blades configured to splay outwards from the blades to form the planar surface between blades.

In one embodiment the blades may be vertically offset to lie on top of each other in a closed position, such that a surface of each fan blade can substantially overlap with the surface of other fan blades. This configuration allows the shade to take up minimum space when not needed. A clip may be provided on an end of a blade to lock the blades against the rivet in this closed configuration.

In an embodiment, the planar surface may lie adjacent to a display of the portable display device. As noted above, this can provide an increased shading surface than the shade cast by the device alone. In such embodiments the planar surface may be considered as a visor.

Typically the planar surface and the display form a continuous shading surface for shading the eyes of a user from a light source when placed between the user and the light source. This ensures that there are no gaps through which sunlight can pass onto a user's face when the shade and device are held between the user's face and a light source (typically the sun).

It can be appreciated that the planar surface may be rotatable such that the surface is configured to form an angle with the display of the portable electronic device. This can allow a user to adjust the angle of the shade to maximise the shading surface if the user is viewing the device at an angle relative to the sun.

In another embodiment the fan blades of the planar surface may be displaced relative to each other, such that a surface area of each fan blade substantially does not overlap with any other fan blade.

In one embodiment, the planar surface may form a hemicircular shape. Typically the hemicircular shape spans 180 degrees of a circle. In further embodiments the shape may span between 140 and 220 degrees of a circle. In an alternative embodiment the planar surface may form a substantially rectangular shape.

Typically the plurality of blades may each comprise a hole at one end of the blades. Accordingly, the blades may be connected to each other via the rivet inserted into the holes. A washer may be placed between an uppermost of the blades and a head of the rivet. The use of a washer can increase the coefficient of friction between the blades and the rivet to aid the blades staying in the planar position.

The mount may comprise a ball joint for rotating the blades and therefore the planar surface relative to the electronic display device. This can allow the blades and therefore the planar surface, and therefore at least part of the shading surface to be positioned between the user and the sun when the user is unable to reposition themselves, such as when the user is lying on a sunbed or the like.

The mount may be or comprise a suction cup, said suction cup configured to be removably attached to a back surface of the portable display device. Additionally or alternatively the mount may be integrated with a protective case of the like.

Typically a length of the blades may be tailored to match a width of the portable display device. For example, when the blades form a hemicircle, the diameter of the hemicircle may be substantially equal to the width of the device. Alternatively, a wider diameter of hemicircle may be used.

In order to maintain the planar shape, the blades may comprise an interlocking groove to receive a corresponding interlocking nub of an adjacent blade. This effectively lock the blades against each other.

The blades may further comprise an end stop to prevent over rotation of the blades. This can act to ensure that the blades are retained in the planar position and ensure that gaps are not present between the blades when fanned out.

In some embodiments the mount provides a finger rest. This can allow a user to hold the device and fan using the mount, for ease of use.

These and other aspects of the invention will be apparent from, and elucidated with reference to, the embodiments described hereinafter.

### BRIEF DESCRIPTION OF THE DRAWINGS

Embodiment of the invention shall now be described in detail by way of example and with reference to the accompanying drawings in which:
Figure 1a illustrates blades of a shade for a portable device, according to an embodiment of the present invention;
Figure 1b illustrates a combination of the blades of figure 1a with a mount;
Figure 1c illustrates a rivet for connecting the blades of figure 1a with the mount;
Figure 2a shows part of the mount of figure 1b;
Figure 2b shows another part of the mount;
Figure 3a shows a front view of a shade according to another embodiment of the present invention;
Figure 3b shows a rear view of a shade according to the embodiment shown in Figure 3a;
Figure 3c shows an exploded view of the shade of Figures 3a and 3b; and
Figure 4 shows the shade of figures 3a-3c in a planar configuration and when mounted to a mobile phone.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### DETAILED DESCRIPTION OF EMBODIMENTS

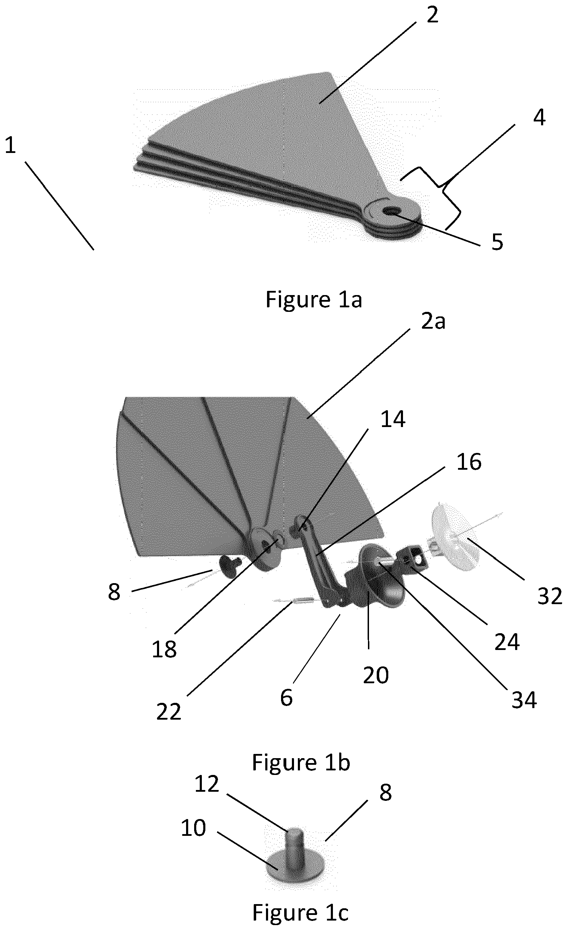

Figure 1a shows a part of the shade 1, comprising a plurality of fan blades 2. Each blade is typically a segment of a circle. Each blade typically comprises a segment having an angle of approximately 25 degrees. In the example shown, four blades 2 are shown, however it can be appreciated that more or less blades 2 may be used as needed. The base of the blade 2 further comprises a circular pivot point 4.

As noted, in one embodiment, each fan blade 2 has a 2-dimensional cone like geometry like the ones shown figure 1. However, it can be appreciated the fan blades can take any suitable geometry such as, for example, rectangular shaped blades 2.

The pivot point 4 contains an aperture 5 through which a blade retainer rivet 8 is inserted from one side of the blade 2 to connect the blades together and to a mount 6. This can be seen in figure 1b, which shows an expanded view of the components that comprise the shade 1 and in more detail in figure 1c. The blade retainer rivet 8 comprises a disk 10 with elongated shaft 12 protruding from the centre of the disk, as shown in figure 1c.

To connect all the fan blades 2 together, the shaft 12 of the retainer rivet 8 is inserted through all the apertures 5 of the blades 2 from one side as shown in figure 1b. In order to lock the blades 2 together, the remaining tip of the shaft 12 that extends beyond the end of the apertures 5 is then inserted into an end 14 of an arm lever 16. The part of the level arm 16 that contains the end 14 makes contact with the pivot point 4 of the upper most blade 2a as shown in figure 1b. A rubber washer 18 is inserted between pivot point 4 of the upper most blade 2a and the arm lever 16 to provide a higher coefficient of friction between the arm lever 16 and the upper most blade. This aids the fanning shape shown in figure 1b to stay open.

In some embodiments, the fan blades 2 can be configured into a closed (figures 1a) or an open position (figures 1b) by the rotation of the fan blades 2 relative to each other by the user about the pivot point 4. When in the closed position each fan blade 2 overlaps with all other fan blades 2. The fan blades 2 can be configured into an open position by rotation of the blades 2 relative to each other about the pivot point 4 by the users, such that the fan blades 2 are displaced relative to each other as shown in figure 1b.

As shown in figure 1b, the fan blades 2 span a total area subtending an angle of 180 degrees in the open position. This arrangement is found to be sufficient to block substantially all of the sunlight that would otherwise enter the user's macular, thus allowing the user to read from a screen of the device properly.

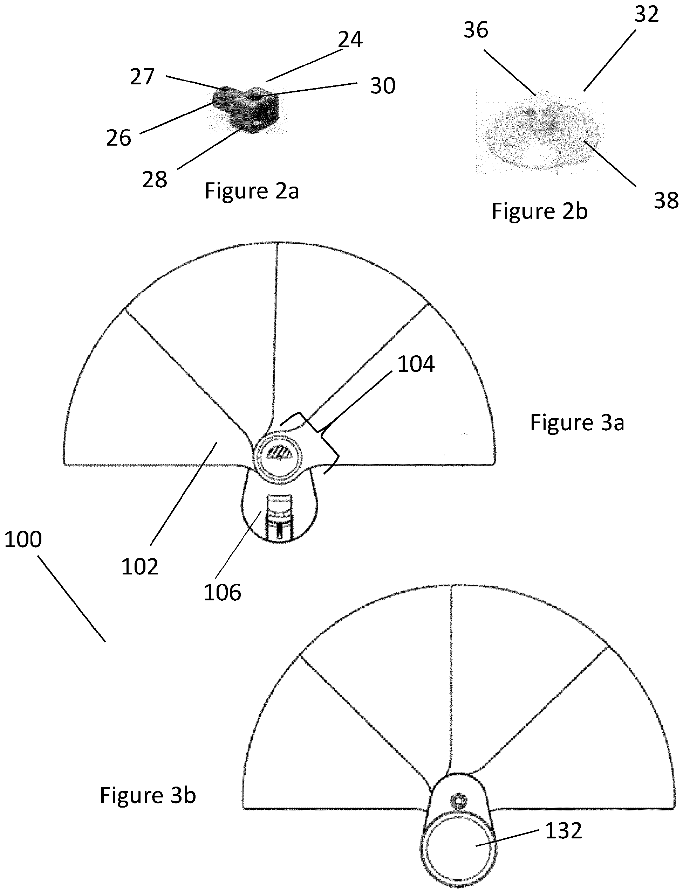

As well as the arm lever 16, the mount 6 further comprises a suction cup housing 20 to which the arm lever 16 is connected. The suction cup housing 20 houses a suction cup tension link 24. The tension link 24 comprises a hollow cylindrical top 26 and a hollow rectangular base 28, as shown in figure 2a. The cylindrical top 26 comprises an opening 27 that allows the tension link 24 to be connected to the arm lever 16 and the cup housing via a pin 22 in a manner shown in figure 1b.

In some embodiments, the rectangular base 28 is further configured to be attached to suction cup 32. This is achieved by inserting a suction cup head 36 (shown in figure 2b) into the rectangular base 28 and securing the head 36 to the base 28 by using a pin 34, in a manner shown in figure 1b. The suction cup 32 further comprises a suction disk 38 configured to be removably attached to a back of an electronic display device, such that the shade 1 is secured to the device. Collectively, this allows the mount 6 to attach the shade 1 to the device.

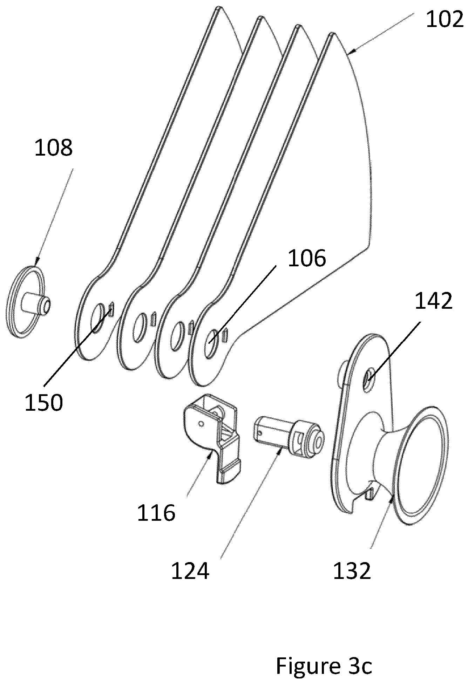

Figures 3a and 3b show a shade 100 according to an alternative embodiment of the present invention. In this embodiment, the blade comprises blades 102 arranged about a common pivot point 104 that is further connected to a mount 106.

Figure 3b shows an exploded view of the shade 100 of figures 3a and 3b. In this figure, the blades 102 are interconnected with a rivet 108 or pin that acts to retain the blades together against a corresponding hole 142 in the mount 106. The rivet allows for relative rotation of the blades 102 about the rivet 108.

The mount 106 is provided with a suction cup 132 having a lever arm 116 and tension link 124 that acts to secure the suction cup 132 to a device in an analogous manner to described in relation to the previous figures.

The blades 102 are further provided with end stops 150 that act to provide tactile and physical ends such that adjacent blades 102 are held in a planar position when the blades are fanned open. Accordingly, an edge of a blade 102 abuts the end stop 150 of an adjacent blade to hold the blades in relative position.

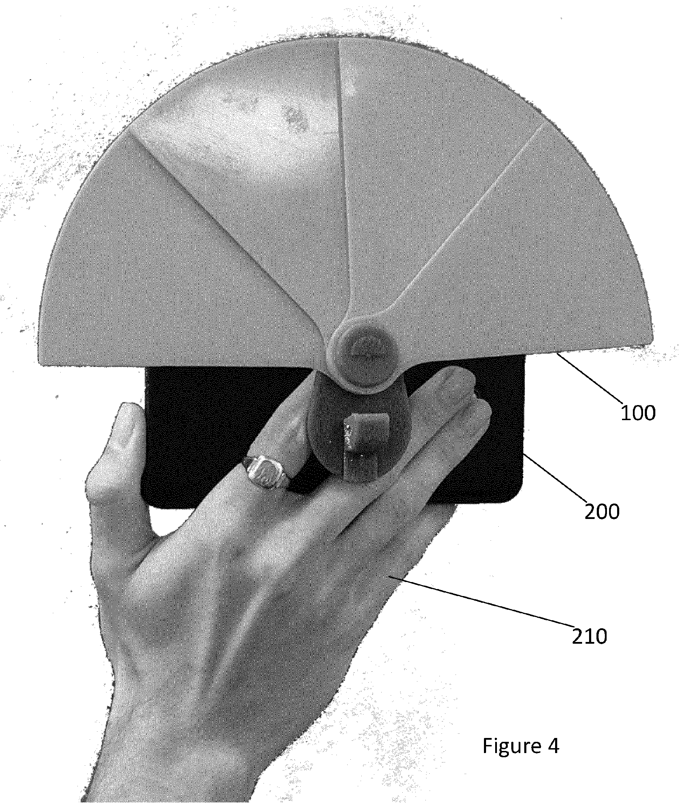

Figure 4 shows the shade 100 as mounted to a mobile phone 200 or other electronic device, such as a mobile phone, e-Book reader, portable gaming console or even a laptop or notebook. In this figure the shade 100 is shown in the planar position with the blades 102 fanned open to provide a shading surface. As can be seen, the shade 100 lies adjacent to the electronic device 200 when fanned open. The mount provides a hand or finger grip for a user 210 to allow the user 210 to grip the shade 100 and electronic device 200 in a single hand, as shown in Figure 4. This allows the user to comfortably hold the shade 100 and device 200 between their face and the sun (or other light source) to cast a shadow over the face of the user to allow for easy reading of the screen of the device.

High pressure plastic moulding injection are used to form the blades and the mount. The materials that can be used for the manufacture of the components include, but are not restricted to, ABS, polycarbonate and polyethylene.

From reading the present disclosure, other variations and modifications will be apparent to the skilled person. Such variations and modifications may involve equivalent and other features which are already known in the art of shades, and which may be used instead of, or in addition to, features already described herein.

Features which are described in the context of separate embodiments may also be provided in combination in a single embodiment. Conversely, various features which are, for brevity, described in the context of a single embodiment, may also be provided separately or in any suitable sub combination.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A shade (100) for a portable device (200) having an electronic display, said shade comprising:
a plurality of blades (102) configured to splay open to form a planar surface for blocking sunlight; and
a mount (106) for securing the planar surface to the portable device substantially adjacent to, and aligned substantially parallel with, the electronic display to position the blades to increase the footprint of the portable device (100), for shading the eyes of a user (210) from a light source when the device is placed between the user and the light source and wherein the mount comprises a grip to allow the user to grip the shade (100) and the device (200) in a single hand.

2. The shade of claim 1, wherein the planar surface is rotatable such that the surface is configured to form an angle with the electronic display of the portable electronic device.

3. The shade of any preceding claim, wherein the blades (102) are vertically offset to lie on top of each other in a closed position, such that a surface of each fan blade substantially overlaps with the surface of other fan blades.

4. The shade of any preceding claim, wherein the planar surface and the display form a continuous shading surface when placed between the user and the light source.

5. The shade of any preceding claim, wherein the fan blades of the planar surface are displaced relative to each other, such that a surface area of each fan blade substantially does not overlap with any other fan blade.

6. The shade of any preceding claim, wherein the planar surface forms a hemicircular shape.

7. The shade of any preceding claim, further comprising a rivet (108) for interconnecting said blades together and to the mount, and wherein the plurality of blades each comprise a hole (142) at one end of the blades, and wherein the blades are connected to each other via the rivet inserted into the holes.

8. The shade of claim 7, further comprising a washer (18) between an uppermost of the blades and a head of the rivet.

9. The shade of any preceding claim, wherein the mount further comprises a ball joint for rotating the blades relative to the electronic display device.

10. The shade of any preceding claim, wherein the mount is configured to be removably attached to a back surface of the portable display device, and optionally or preferably comprises a suction cup (32).

11. The shade of any preceding claim, wherein a length of the blades is tailored to match a width of the portable display device.

12. The shade of any preceding claim, wherein the blades comprise an interlocking groove to receive a corresponding interlocking nub of an adjacent blade.

13. The shade of any preceding claim, wherein the blades further comprise an end stop to prevent over rotation of the blades.

14. The shade of any preceding claim, wherein the grip provides a finger rest.

## Patentansprüche

1. Blende (100) für ein tragbares Gerät (200), das eine elektronische Anzeige aufweist, wobei die Blende Folgendes umfasst:
eine Vielzahl von Lamellen (102), die dazu konfiguriert ist, aufzufächern, um eine ebene Fläche zum Blockieren von Sonnenlicht zu bilden; und
eine Halterung (106) zum Sichern der ebenen Fläche an dem tragbaren Gerät, im Wesentlichen benachbart zu der elektronischen Anzeige und im Wesentlichen parallel zu dieser ausgerichtet, um die Lamellen zu positionieren, um die Grundfläche des tragbaren Gerätes (100) zum Abschatten der Augen eines Benutzers (210) vor einer Lichtquelle zu erhöhen, wenn das Gerät zwischen dem Benutzer und der Lichtquelle platziert ist, und wobei die Halterung einen Griff umfasst, um es dem Benutzer zu ermöglichen, die Blende (100) und das Gerät (200) mit einer Hand zu greifen.

2. Blende nach Anspruch 1, wobei die ebene Fläche drehbar ist, sodass die Fläche dazu konfiguriert ist, einen Winkel mit der elektronischen Anzeige des tragbaren elektronischen Gerätes zu bilden.

3. Blende nach einem der vorhergehenden Ansprüche, wobei die Lamellen (102) vertikal versetzt sind, um in einer geschlossenen Position aufeinander zu liegen, sodass sich eine Fläche jeder Fächerlamelle im Wesentlichen mit der Fläche der anderen Fächerlamellen überlappt.

4. Blende nach einem der vorhergehenden Ansprüche, wobei die ebene Fläche und die Anzeige eine kontinuierliche Schattenfläche bilden, wenn sie zwischen dem Benutzer und der Lichtquelle platziert sind.

5. Blende nach einem der vorhergehenden Ansprüche, wobei die Fächerlamellen der ebenen Fläche relativ zueinander verschoben sind, sodass sich ein Flächeninhalt jeder Fächerlamelle im Wesentlichen nicht mit einer beliebigen anderen Fächerlamelle überlappt.

6. Blende nach einem der vorhergehenden Ansprüche, wobei die ebene Fläche eine Halbkreisform bildet.

7. Blende nach einem der vorhergehenden Ansprüche, ferner umfassend einen Niet (108) zum Verbinden der Lamellen miteinander und mit der Halterung und wobei die Vielzahl von Lamellen jeweils ein Loch (142) an einem Ende der Lamellen umfasst und wobei die Lamellen über den in die Löcher eingeführten Niet miteinander verbunden sind.

8. Blende nach Anspruch 7, ferner umfassend eine Unterlegscheibe (18) zwischen einer obersten der Lamellen und einem Kopf des Niets.

9. Blende nach einem der vorhergehenden Ansprüche, wobei die Halterung ferner ein Kugelgelenk zum Drehen der Lamellen relativ zu dem elektronischen Anzeigegerät umfasst.

10. Blende nach einem der vorhergehenden Ansprüche, wobei die Halterung dazu konfiguriert ist, entfernbar an einer Rückfläche des tragbaren Anzeigegerätes angebracht zu werden, und optional oder vorzugweise einen Saugnapf (32) umfasst.

11. Blende nach einem der vorhergehenden Ansprüche, wobei eine Länge der Lamellen genau auf eine Breite des tragbaren Anzeigegerätes abgestimmt ist.

12. Blende nach einem der vorhergehenden Ansprüche, wobei die Lamellen eine Verriegelungsnut umfasst, um eine entsprechende Verriegelungsnoppe einer benachbarten Lamelle aufzunehmen.

13. Blende nach einem der vorhergehenden Ansprüche, wobei die Lamellen ferner einen Endanschlag umfassen, um eine Überdrehung der Lamellen zu verhindern.

14. Blende nach einem der vorhergehenden Ansprüche, wobei der Griff eine Fingerstütze bereitstellt.

## Revendications

1. Écran anti-éblouissement (100) pour un appareil portable (200) ayant un affichage électronique, ledit écran anti-éblouissement comprenant :
une pluralité de pales (102) configurées pour s'ouvrir en s'écartant afin de former une surface plane destinée à bloquer la lumière du soleil ; et
un support (106) pour fixer la surface plane à l'appareil portable sensiblement adjacente à, et alignée sensiblement parallèlement à, l'affichage électronique pour positionner les pales pour augmenter l'empreinte de l'appareil portable (100), pour protéger les yeux d'un utilisateur (210) d'une source lumineuse lorsque l'appareil est placé entre l'utilisateur et la source lumineuse et dans lequel le support comprend une poignée pour permettre à l'utilisateur de saisir l'écran anti-éblouissement (100) et l'appareil (200) d'une seule main.

2. Écran anti-éblouissement selon la revendication 1, dans lequel la surface plane est rotative de telle sorte que la surface est configurée pour former un angle avec l'affichage électronique de l'appareil électronique portable.

3. Écran anti-éblouissement selon l'une quelconque des revendications précédentes, dans lequel les pales (102) sont décalées verticalement pour se trouver les unes sur les autres dans une position fermée, de telle sorte qu'une surface de chaque pale de ventilateur chevauche sensiblement la surface des autres pales de ventilateur.

4. Écran anti-éblouissement selon l'une quelconque des revendications précédentes, dans lequel la surface plane et l'affichage forment une surface d'ombrage continue lorsqu'elle est placée entre l'utilisateur et la source lumineuse.

5. Écran anti-éblouissement selon l'une quelconque des revendications précédentes, dans lequel les pales de ventilateur de la surface plane sont déplacées les unes par rapport aux autres, de telle sorte qu'une zone de surface de chaque pale de ventilateur ne chevauche sensiblement aucune autre pale de ventilateur.

6. Écran anti-éblouissement selon l'une quelconque des revendications précédentes, dans lequel la surface plane forme une forme hémicirculaire.

7. Écran anti-éblouissement selon l'une quelconque des revendications précédentes, comprenant en outre un rivet (108) pour interconnecter lesdites pales entre elles et au support, et dans lequel la pluralité de pales comprend chacune un trou (142) à une extrémité des pales, et dans lequel les pales sont connectées les unes aux autres via le rivet inséré dans les trous.

8. Écran anti-éblouissement selon la revendication 7, comprenant en outre une rondelle (18) entre la partie supérieure des pales et une tête du rivet.

9. Écran anti-éblouissement selon l'une quelconque des revendications précédentes, dans lequel le support comprend en outre un joint à rotule pour faire tourner les pales par rapport à l'appareil d'affichage électronique.

10. Écran anti-éblouissement selon l'une quelconque des revendications précédentes, dans lequel le support est configuré pour être fixé de manière amovible à une surface arrière de l'appareil d'affichage portable, et comprend éventuellement ou de préférence une ventouse (32).

11. Écran anti-éblouissement selon l'une quelconque des revendications précédentes, dans lequel une longueur des pales est adaptée pour correspondre à une largeur de l'appareil d'affichage portable.

12. Écran anti-éblouissement selon l'une quelconque des revendications précédentes, dans lequel les pales comprennent une rainure de verrouillage pour recevoir un bouton de verrouillage correspondant d'une pale adjacente.

13. Écran anti-éblouissement selon l'une quelconque des revendications précédentes, dans lequel les pales comprennent en outre une butée d'extrémité pour empêcher une rotation excessive des pales.

14. Écran anti-éblouissement selon l'une quelconque des revendications précédentes, dans lequel la poignée fournit un repose-doigt.
